# EUROPÄISCHE PATENTSCHRIFT

(11) **EP 3 810 364 B1**
(45) Veröffentlichungstag und Bekanntmachung des Hinweises auf die Patenterteilung: **05.03.2025**
(21) Anmeldenummer: 19733440.2
(22) Anmeldetag: 19.06.2019
(51) Int. Cl.: B23K 26/08, B23K 26/342

(54) **VORRICHTUNG UND VERFAHREN ZUM EXTREM-HOCHGESCHWINDIGKEITSAUFTRAGSCHWEISSEN**
DEVICE AND METHOD FOR ULTRA-HIGH-SPEED LASER CLADDING
DISPOSITIF ET PROCÉDÉ DE SOUDAGE DE RECHARGEMENT LASER À GRANDE VITESSE

(30) Priorität: 20.06.2018 DE 102018114883
(43) Veröffentlichungstag der Anmeldung: 28.04.2021
(73) Patentinhaber: Ponticon GmbH, 65201 Wiesbaden (DE)
(72) Erfinder: SCHULTE, Oliver, 55271 Stadecken-Elsheim (DE)
(74) Vertreter: Patentanwälte Dr. Keller, Schwertfeger Partnerschaft mbB
(86) Internationale Anmeldenummer: PCT/EP2019/066193
(87) Internationale Veröffentlichungsnummer: WO 2019/243418

(56) Entgegenhaltungen:
- EP-A1- 2 283 932
- CN-A- 104 859 147
- CN-A- 105 499 796
- CN-A- 105 773 984
- DE-A1- 102004 010 826
- US-B2- 9 105 193

## Beschreibung

### Technisches Gebiet:

Die vorliegende Erfindung liegt auf dem Gebiet des Laserauftragschweißens und betrifft eine Vorrichtung und ein Verfahren zum Laserauftragschweißen, insbesondere zur Durchführung eines Extremen Hochgeschwindigkeits-Laserauftragschweißverfahrens (EHLA).

### Stand der Technik:

Das Laserauftragschweißen in den herkömmlichen Verfahren (beispielsweise LMD = Laser Metal Deposition) wird für die Oberflächenbehandlung, die Reparatur und die additive Fertigung von Bauteilen verwendet. Dabei wird ein pulverförmiger Zusatzwerkstoff, beispielsweise ein Metallpulver, mit Hilfe einer Pulverzufuhrdüse in die Wechselwirkungszone des Laserstrahls mit dem Basismaterial eingebracht und dort mit einem Laserstrahl aufgeschmolzen, so dass ein Verbund entsteht.

In einer Variante des Laserauftragschweißens, dem Extremen Hochgeschwindigkeits-Laserauftragschweißen (EHLA), wird der pulverförmige Zusatzwerkstoff durch den Laserstrahl aufgeschmolzen, bevor er in das durch den Laserstrahl erzeugte Schmelzbad gelangt. Damit können sehr hohe Verfahrgeschwindigkeiten von bis 500 m/min oder mehr realisiert werden und Schichtdicken im Bereich von 10 - 250 µm pro Schicht hergestellt werden. Ein solches Verfahren ist beispielsweise Bestandteil der DE 10 2011 100 456 B4. Dabei wird einem auf einer zu bearbeitenden Oberfläche vorliegenden Schmelzbad zumindest ein Zusatzwerkstoff in vollständig geschmolzener Form zugeführt. Hierzu wird der Zusatzwerkstoff, der zunächst pulverförmig vorliegt, mittels eines Laserstrahls in einem Abstand größer als Null zum Schmelzbad geschmolzen und dem Schmelzbad dann flüssig zugeführt. Dabei kann die Werkstückoberfläche gegenüber dem Laserstrahl und dem Pulvergasstrahl bewegt werden, sodass sich das Schmelzbad über die Oberfläche bewegt. Mit dem Verfahren sind besonders hohe Geschwindigkeiten der Werkstückbewegung von mehr als 50 m/min möglich. Durch das Übereinanderlegen einzelner Schichten lassen sich dreidimensionale Strukturen additiv aufbauen. Der Aufbau solcher Strukturen geschieht entweder auf vorhandenen Bauteilen oder bei der Erzeugung ganzer Objekte auf einer Werkstückträgerplatte, die dann als Basis dient.

Um solche hohe Prozessgeschwindigkeiten zu erreichen, sind hohe Anforderungen an die Prozesstechnik sowie Kinematik der dafür verwendeten Vorrichtungen erforderlich. So muss beispielsweise die Pulverzufuhr zur Pulverdüse derart ausgestaltet sein, dass die Einbringung des Pulvers in den Laserstrahl optimal verläuft und der Pulverwirkungsgrad maximiert wird. Solche Lösungen sind beispielsweise in der DE 10 2014 220 183 A1 beschrieben, in der eine Laserstrahlanordnung beschrieben wird, die mehrere einzelne Laserstrahlen erzeugen kann, um einen großen Pulverwirkungsgrad zu erzielen. Nachteilig ist jedoch, dass die einzelnen Laserstrahlquellen koordiniert werden müssen, um fokussiert auf das Pulver zu treffen, was sehr aufwändig ist. Eine Düse für das Laserauftragschweißen ist beispielsweise in der EP 2 774 714 A1 beschrieben. Die sorgt für die definierte Zufuhr des Pulvers in den Laserstrahl.

Kritisch ist zudem die extrem schnelle Bewegung des Schweißkopfes und/oder des Werkstückträgers Bei Werkzeugmaschinen werden häufig Lagerungseinrichtungen zur Bearbeitung eines Werkstoffes eingesetzt, welche als Tripod oder Hexapod bezeichnet werden. Solche Einrichtungen sind beispielsweise Bestandteil der DE 196 40 769 A1, US 5,401,128, DE 199 03 613 C1. Lösungen für ein Hexapod sind auch Bestandteil der US 6,196,081 B1 und der DE 10 2010 025 275 B4. Diese Vorrichtungen sind jedoch nur bedingt oder nicht für einen Einsatz beim Extremen Hochgeschwindigkeits-Laserauftragschweißen (EHLA) geeignet, da sie nicht für die Präzision bei hohen Beschleunigungen oder Verzögerungen ausgelegt sind.

Die US 2017/0282297 A1 beschreibt eine Vorrichtung zur Bewegung einer Düse entlang der x-, y-, und z-Koordinaten, bestehend aus einem Tripod und Aufhängungen für eine Düseneinheit. Zur Bewegung werden fünf Aktoren benötigt. Das Werkstück selbst wird jedoch nicht bewegt und bleibt fixiert.

Die DE 33 19 665 A1 beschreibt eine Vorrichtung zur linearen Bewegung von Sprühorganen mit einem Gegengewicht. Hierfür ist eine federvorgespannte Umlenkrolle erforderlich, welche allerdings hohe Dynamiken verhindert. Die Verwendung von Federn zur Energiespeicherung an definierten Umkehrpunkten und die dort angeordneten Endschalter erlauben jedoch nur einen fest voreingestellten Arbeitshub bei geringer Geschwindigkeit. Für das EHLA-Verfahren wäre eine solche Vorrichtung nicht geeignet.

Gleiches gilt auch für die in der CN 105 499 796 A beschriebenen Vorrichtung, bei der ebenfalls der Arbeitskopf geführt wird, während die Produktträgerplatte fixiert ist. Vertikale Beschleunigungskräfte werden ebenfalls nicht kompensiert. Gleiches gilt auch für die Variante der CN 105 773 984 A, die die Grundlage für den Oberbegriff von Anspruch 1 bildet, eine Tripod-Vorrichtung zum 3D-Druck.

### Darstellung der Erfindung:

Es ist daher Aufgabe der vorliegenden Erfindung, eine Vorrichtung und ein Verfahren zum Extremen Hochgeschwindigkeits-Laserauftragschweißen bereitzustellen, mit der hohe Verfahrgeschwindigkeiten von bis zu 500 m/min bei hohen Bahn- und Wiederholgenauigkeiten möglich sind.

Diese Aufgabe wird gelöst durch eine erfindungsgemäße Vorrichtung und ein Verfahren, wie in den nachfolgenden unabhängigen Patentansprüchen beansprucht. Bevorzugte Ausführungsvarianten finden sich in den Unteransprüchen wieder.

Die erfindungsgemäße Vorrichtung ermöglicht eine Relativgeschwindigkeit zwischen Schweißkopf und Werkstückträgerplatte von größer 50 m/min oder mehr für Schichtdicken üblicherweise von 0,01 mm bis 0,25 mm bei Nutzung des EHLA-Verfahrens und höheren Schichtdicken bei Verwendung anderer Auftragschweißköpfe. Es werden je nach Dynamik, Art der aufzubauenden Kontur und den Prozessparametern Bahngenauigkeiten von besser als 0,01mm erreicht. Die Vorrichtung muss dafür ausgelegt sein, dass beispielsweise Beschleunigungen des Schweißkopfes unterhalb der maximal zulässigen Beschleunigung einstellbar sind. Solche Mechaniken lassen sich durch die erfindungsgemäße Ausgestaltung und insbesondere der neuartigen Aufhängung des Werkstückträgers bzw. des Trägers für den Schweißkopf in der Vorrichtung erzielen.

Die erfindungsgemäße Vorrichtung umfasst hierfür wenigstens drei Antriebssäulen mit - je nach Ausführungsvariante - einem zentral zwischen den Antriebssäulen angeordneten Werkstückträger zur Aufnahme des herzustellenden oder zu bearbeitenden Produktes und/oder eine Trägerplatte für den Schweißkopf. Der Werkstückträger besitzt einen Aufnahmebereich zur Aufnahme eines herzustellenden oder zu bearbeitenden Produktes. An dem Werkstückträger und/oder der Trägerplatte sind mehrere Zug-Druck-Streben gleichschenkelig angeordnet, wobei wenigstens eine Zug-Druck-Strebe pro Antriebssäule vorgesehen ist, vorzugsweise ein Paar Zug-Druck-Streben pro Aufhängepunkt. Der Werkstückträger und/oder die Trägerplatte ist über die Zug-Druck-Streben in die drei Raumrichtungen (x, y, z) bewegbar verbunden. Hierfür sind an den Enden der Zug-Druck-Streben Drehgelenke vorgesehen, welche die Strebe mit Werkstückträger oder Trägerplatte an einem Ende und die Antriebssäule am anderen Ende koppeln. Jede Antriebssäule umfasst wenigstens eine dem Werkstückträger und/oder der Trägerplatte zugewandte innere Führungsschiene mit einem darin geführten inneren Schlitten zur Durchführung von Bewegungen in den drei Raumrichtungen (x, y, z), vorzugsweise Bahnbewegungen des Werkstückträgers und/oder der Trägerplatte. Dazu wird der innere Schlitten entlang der inneren Führungsschiene vorzugsweise vertikal nach oben oder unten geführt. Ferner umfasst die Vorrichtung auch den Schweißkopf, beispielsweise den Laserkopf mit Pulverzufuhrdüse zum Einbringen des Zusatzmaterials in das Schmelzbad. Anstelle einer Pulverzufuhrdüse ist auch die Verwendung einer Drahtzufuhrauftragschweißdüse möglich.

Die hier gewählte Bezeichnung "oben" bezeichnet die Kopfseite des jeweiligen Bauteils oder der gesamten Vorrichtung bei Frontansicht, die Bezeichnung "unten" dessen Fußseite. Die Begriffe "innen" und "außen" bezeichnen die Lage des Bauteils relativ zum herzustellenden Produkt. So ist die innere Führungsschiene dem Produkt zugewandt, während die äußere Führungsschiene auf der produktabgewandten Seite der Antriebssäule ausgebildet ist. Vorzugsweise sind die innere Führungsschiene und die äußere Führungsschiene gegenüberliegend an der Antriebssäule angebracht.

Der Begriff "Werkstückträger" bezeichnet das Bauteil, welches das herzustellende oder zu bearbeitende Produkt aufnimmt. Der Begriff "Trägerplatte" bezeichnet das Bauteil, welches den Schweißkopf, also vorzugsweise den Laserkopf, aufnimmt. Erfindungsgemäß wird in der äußeren Führungsschiene ein äußerer Schlitten zur gegenüber dem inneren Schlitten vertikal entgegengesetzten Führung eines Ausgleichsgewichtes geführt. Erfindungsgemäß sorgt das Ausgleichsgewicht für den, bei dem EHLA-Verfahren auftretenden Geschwindigkeiten von > 200 m/min, vorzugsweise 500 m/min oder mehr, und Beschleunigungen von 50 m/s² oder mehr eintretenden Massenausgleich. Denn bei diesen hohen Verfahrgeschwindigkeiten entstehen durch die sich bewegenden Massen hohe Impulse. Diese Impulse können die Umgebung der Vorrichtung beeinflussen und zu unerwünschten Störungen beim Laserauftrag führen. Durch die Ausgleichsgewichte und das Zusammenspielen der einzelnen Antriebssäulen können die horizontalen Massebewegungen zumindest teilweise abgefangen werden. Die erfindungsgemäße Lösung sieht dafür eine Trennung der Antriebssysteme vor, wodurch ein nahezu vollständiger Ausgleich der vertikalen Massebewegung möglich ist.

Der Schweißkopf ist vorzugsweise parallel zum Werkstückträger angeordnet, vorzugsweise oberhalb des Werkstückträgers. Es handelt sich hierbei vorzugsweise um einen Laserschweißkopf oder einen Lötkopf.

In einer Variante der Vorrichtung sind drei Antriebssäulen vorgesehen, bei der die Zug-Druck-Streben von oben über Drehgelenke mit der Kopfseite des Werkstückträgers und/oder Trägerplatte sowie den Antriebssäulen verbunden sind. Die Achsenendpunkte und somit Aufhängungen sind vorzugsweise entsprechend einem gleichschenkeligen Dreieck an dem Werkstückträger oder der Trägerplatte angeordnet, wodurch sie den Werkstückträger oder die Trägerplatte ohne Neigung halten und sich der Werkstückträger oder die Trägerplatte in der Horizontalebene (x, y) und in vertikaler Richtung (z) oder einer Kombination der drei Raumrichtungen verfahren lässt. Vorzugsweise handelt es sich bei dieser Variante um einen Tripod.

Angetrieben werden die Schlitten vorzugsweise durch hochdynamische Linear-Direktantriebe. Die DE 203 06 233 U1 beschreibt ein solches Prinzip der Linearführung bei Pulversprühpistolen. Diese Antriebsvariante ermöglicht sehr hohe Beschleunigungen um Geschwindigkeiten von über 5 m/s bei nahezu beliebigen Hüben zu erreichen. Natürlich sind auch andere Antriebskonzepte für die Durchführung einer Bahnbewegung des Werkstückträgers und/oder der Trägerplatte möglich. Bei der Bahnbewegung von Werkstückträger oder Trägerplatte handelt es sich vorzugsweise um eine Bewegung entlang der x-, y-, z-Raumachsen, vorzugsweise ausgeführt als Synchronbewegung von drei Achsen.

Es ist vorzugsweise vorgesehen, dass die Zug-Druck-Streben in ihrer Länge nicht verstellbar sind, um eine effiziente Energiekettenführung zu gewährleisten und unkontrollierte Schwingungen von Werkstückträger oder Trägerplatte für den Schweißkopf zu vermeiden.

Die Aufhängung von Werkstückträger und/oder Trägerplatte erfolgt vorzugsweise an sechs Punkten. Das heißt, es sind jeweils ein Paar Zug-Druck-Streben pro Aufhängepunkt vorgesehen, welche wiederum mit einem Schlitten einer Antriebssäule verbunden sind. Vorzugsweise ist der Werkstückträger und/oder die Trägerplatte an sechs Punkten über jeweils zwei gleich lange parallele Zug-Druck-Streben aufgehängt, wobei jeweils zwei Zug-Druck-Streben mit jeweils einem Schlitten einer Antriebssäule verbunden sind. Dadurch kann der Werkstückträger oder die Trägerplatte nicht aus der horizontalen Lage verdreht werden.

In einer weiter entwickelten Ausführungsvariante ist eine Sechs-Achsen-Geometrie vorgesehen, bei der jede einzelne Zug-Druck-Strebe mit einem eigenen inneren Schlitten verbunden ist (Hexapod). Demnach umfasst jede Antriebssäule einen mit einer Zug-Druck-Strebe verbundenen Schlitten mit einer entsprechenden Führungsschiene zur vertikalen Führung des Schlittens und Neigung von Werkstückträger oder Trägerplatte. Dadurch sind Neigungswinkel von Werkstückträger oder Trägerplatte von vorzugsweise bis zu 80° möglich. Vorzugsweise erfolgt die vertikale Führung der Schlitten, d.h. des inneren, produktzugewandten Schlittens, und des an der Rückseite der Antriebssäule verlaufenden äußeren Schlittens über Umlenkungen, die an der Kopfseite bzw. Fußseite jeder Antriebssäule angebracht sind. Die vertikale Führung der Schlitten erfolgt über einen Antriebsriemen, vorzugsweise über einen Zahnriemen. Vorzugsweise ist eine Antriebsklemmung für den Antriebsriemen vorgesehen. Vorzugsweise ist bei dieser Variante jede einzelne Zug-Druck-Strebe eine Antriebssäule mit einem eigenen, unabhängig vertikal bewegbaren Schlitten innerhalb einer eigenen Führungsschiene einer Antriebssäule in vertikaler Richtung individuell bewegbar.

Erfindungsgemäß wird der Schweißkopf von der Trägerplatte gehalten, welche parallel zum Werkstückträger, vorzugsweise oberhalb oder unterhalb des Werkstückträgers angeordnet ist. Zwischen der Trägerplatte und dem Werkstückträger ist in einer weiterentwickelten Variante eine Taumelplatte aufgehängt, was einen Achsenversatz des Schweißkopfes ermöglicht. Dies ermöglicht die Herstellung unterschiedlicher Bauteile und eine hohe Anpassbarkeit der Vorrichtung an die einzelnen Produktionsvorgaben. Mit Hilfe dieser trägheitsarmen Taumelvorrichtung lassen sich insbesondere Korrekturen der relativen oder absoluten Bewegungsbahn-Ungenauigkeiten des Laserkopfes durchführen, die ihre Ursache in der Trägheit zwischen Steuerung und Antriebselementen haben. Die Taumelplatte ermöglicht zusätzlich beim Abfahren oder bei der Erzeugung kompakter Schweißstrukturen die Übernahme von kleinen Teilbewegungen, beispielsweise enger Kurvenradien. Dadurch kann der Hauptbewegungsapparat entlastet und die Geschwindigkeit des Gesamtsystems gesteigert werden.

In einer Grundvariante wird der Schweißkopf (d.h. der Laserkopf) oberhalb des Werkstückträgers an einer Aufhängung fix befestigt. Durch den Aufbau von größeren Strukturen bei einem herzustellenden Produkt, kann sich jedoch der Schwerpunkt des Werkstückträgers stark verschieben, wodurch eine Reduzierung der Geschwindigkeit und/oder der Beschleunigung des Werkstückträgers notwendig wäre. Um dies zu vermeiden, ist vorzugsweise ein Kupplungssystem für den Schweißkopf an dem Werkstückträger vorgesehen, welches vorzugsweise automatisiert ist. Dabei handelt es sich vorzugsweise um eine Drei-Punkt-Kupplung, mit der der Schweißkopf von dem Werkstückträger übernommen werden kann.

Die Taumelplatte ermöglicht ferner die Herstellung von Konturen oder Kurven, die normalerweise durch die Generierung von kleinen Segmenten in den drei Raumrichtungen (x,y,z) durch die Hauptachsen erzeugt werden. Die Unterteilung einer Kurve in sehr kleine Kurvensegmente bedeutet allerdings ständige Kurskorrekturen mit laufend neuen Querbeschleunigungen. Aufgrund der mechanischen Trägheit können die Hauptachsen einen vorgegebenen Satz nicht abschließen, bevor von der Steuerung ein neuer Fahrsatz übermittelt wird. Bei Hochgeschwindigkeitsprozessen werden daher Radien mit zunehmender Bahngeschwindigkeit zum Kurveninneren versetzt werden. Kreisbahnen haben dann einen kleineren Durchmesser. Dies führt zum Überschleifen und zu einer Bahnabweichung.

Die erfindungsgemäße Taumelplatte ermöglicht in dieser Variante die Kompensation des Überschleifens, indem ein Achsversatz des Schweißkopfes von ca. 1° - 5°, vorzugsweise 1° - 3° möglich ist.

Vorzugsweise erfolgt die Aufhängung der Trägerplatte an eine Deckplatte über eine von oben fassende obere Kupplungspfanne sowie eine von unten fassende untere Kupplungspfanne über entsprechende Halterungen. Vorzugsweise ist die Taumelplatte mit der Trägerplatte über Aufhängungen verbunden, um den erforderlichen Achsenversatz zu erzielen.

In einer weiteren Variante ist vorgesehen, dass eine Trägerplatte für den Schweißkopf oberhalb des Werkstückträgers angeordnet ist, welche jeweils durch eigene Zug-Druck-Streben aufgehängt sind. Dabei besitzt jede Platte einen eigenen Schlitten, der in einer gemeinsamen Führung einer Antriebssäule vertikal bewegbar ist. Bei dieser Variante ist eine Verstellbarkeit sowohl des Werkstückträgers, als auch des Schweißkopfes über die Trägerplatte möglich, da die Zug-Druck-Streben mit an deren Enden angebrachten Drehgelenken eine Verschiebbarkeit der Trägerplatte bzw. des Werkstückträgers in die drei Raumrichtungen (x, y, z) ermöglichen. Grundsätzlich ist dabei die Kopplung der Zug-Druck-Streben an den Werkstückträger oder die Trägerplatten wahlweise an deren Seite, an deren Oberseite oder an deren Unterseite möglich. In einer bevorzugten Variante ist vorgesehen, dass die Kopplung der Zug-Druck-Streben an dem Werkstückträger für das Produkt von der Seite erfolgt, während die Kopplung der Zug-Druck-Streben der Trägerplatte für den Schweißkopf von oben erfolgt. Je nach Produktionsart sind auch andere Varianten denkbar.

In einer Variante sind sowohl die Trägerplatte als auch der Werkstückträger in die drei x-, y-, z-Raumrichtungen individuell verfahrbar. In einer weiteren, bevorzugten Variante ist die Trägerplatte unbeweglich ausgestaltet und der Werkstückträger achsenbeweglich in die drei x-, y, z-Raumrichtungen verfahrbar.

Vorzugsweise ist in einer weiteren Ausführungsform eine Schwenk-Dreheinrichtung für das herzustellende Produkt vorgesehen, um synchron-gegenläufige Bewegungen von unabhängigen Achssystemen bei hoher Bewegungsgeschwindigkeit des nicht laserkopfführenden Achssystems zu ermöglichen. Die Schwenkeinrichtung ist unterhalb des Werkstückträgers angeordnet und ermöglicht eine Neigung und / oder Drehung des Produktes

Die Erfindung betrifft auch ein Verfahren zum Extrem-Hochgeschwindigkeitsauftragschweißen (EHLA) gemäß Anspruch 14.

Bei dem Verfahren wird ein pulverförmiger Zusatzwerkstoff durch eine Pulverdüse in das vom Laserstrahl auf der Bauteiloberfläche erzeugte Schmelzbad injiziert und geschmolzen. Dadurch entsteht auf dem Bauteil eine dünne Schicht. Beim EHLA-Verfahren wird der pulverförmige Zusatzwerkstoff in den Laserstrahl injiziert und dort geschmolzen, noch bevor das Pulver das Schmelzbad erreicht. Ziel ist es, einen möglichst dichten, homogenem Pulvergasstrahl mit hohem Pulvernutzungsgrad zu erzeugen. Dadurch lassen sich dünne Schichten mit hoher Genauigkeit bei hohen Prozessgeschwindigkeiten auf Bauteilen anbringen, beispielsweise für Teile der Automobilindustrie oder Luftfahrtindustrie. Die erfindungsgemäße Vorrichtung kommt hierbei in der Grundvariante mit drei Aktoren aus.

Das erfindungsgemäße Verfahren wird zur Herstellung eines zu fertigenden Produkts bzw. Werkstücks eingesetzt.

Bei dem erfindungsgemäßen Verfahren können unterschiedliche Düsen eingesetzt werden. Beispiele sind diverse Pulverkegeldüsen, Hybridbearbeitungsdüsen oder Mehrstrahldüsen.

Bei dem erfindungsgemäßen Verfahren kommen vorzugsweise Schweißdüsen zum Einsatz, wie zum Beispiel Pulverzufuhrdüsen oder Drahtzufuhrdüsen.

Nach dem Schneiden mit einem Laserschneidekopf ist auch eine nachträgliche Behandlung des Werkstückes mit einem Fräskopf möglich. In einer bevorzugten Variante umfasst die erfindungsgemäße Vorrichtung und das Verfahren daher einen achsenbeweglichen Fräskopf. Dieser kann auch in Serie zum Schweißkopf geschaltet sein.

In einer weiter bevorzugten Variante ist auch eine anschließende optionale Beschichtung des Werkstückes nach der Laserbearbeitung und/oder dem Fräsen vorgesehen.

In einer weiteren Ausführungsvariante erfolgt zur Ausgestaltung von Kurven und Hohlräumen in dem Werkstück ein oszillierender Betrieb, d.h. der Materialauftrag erfolgt nicht durchgehend sondern entsprechend der Struktur des Werkstückes zeitversetzt. Vorzugsweise erfolgt eine horizontale, vertikale oder diagonale Führung des Schweißkopfes, um beispielsweise eine kurvenförmige oder bahnförmige Struktur auszubilden. Dadurch lassen sich beispielsweise hochstrukturierte Gehäuse von Automatik- und Schaltgetrieben, Düsen von Raketenmotoren, komplexe Halter oder Achssysteme oder Füllstrukturen massiver Körper herstellen.

Bei dem erfindungsgemäßen Verfahren können ferner amorphe Materialzusammensetzungen zur Anwendung kommen, wie zum Beispiel kristalline Festkörper, amorphe Festkörper oder Mischformen davon. Amorphe Materialien bestehen in der Regel aus dem gleichen Material wie kristalline Festkörper. Der Unterschied besteht jedoch in der Gitterausrichtung bei der Abkühlung. Amorphe Festkörper entstehen, wenn sich das Material so schnell abkühlt, das sich die Atome nicht mehr ausrichten können. Dadurch lassen sich Sandwichmaterialien herstellen wie zum Beispiel Werkzeugstahl mit Bronzebeschichtung für den Formenbau, Aluminium- / Edelstahl-Schichtungen für die Luftfahrt oder Titan-Stahl Strukturen als Werkzeugpanzerung in der Glasindustrie. Daneben lassen sich Mischmaterialzusammensetzungen realisieren, wie zum Beispiel Wolfram-Karbid-Matrix auf Grauguss zur Verwendung bei Bremsscheiben oder zur DLC-Werkzeug-Beschichtung.

### Kurze Beschreibungen der Zeichnungen:

Die Erfindung wird in den nachfolgenden Zeichnungen näher erläutert. Es zeigen:
- Fig. 1: eine erste Ausführungsvariante der Vorrichtung in Form eines Tripoden,
- Fig. 2: eine weitere Ausführungsvariante in Form eines Hexapoden,
- Fig. 3: eine weiterentwickelte Variante mit Taumelplatte,
- Fig. 4: eine Detaildarstellung der Taumelplatte mit Schweißkopfaufhängung,
- Fig. 5: ein kombiniertes Achsensystem für einen bewegten Werkstückträger und eine bewegte Trägerplatte,
- Fig. 6: ein alternatives Achsensystem für einen bewegten Werkstückträger und eine bewegte Trägerplatte,
- Fig. 7: eine kombinierte Lösung mit zusätzlicher Dreh-Schwenkeinheit.

### Wege zur Ausführung der Erfindung:

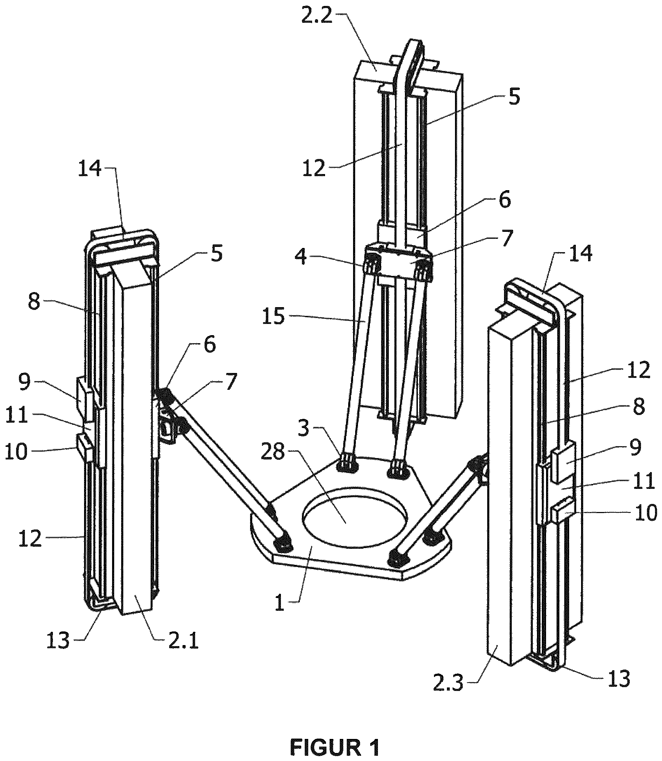

In Fig. 1 erkennt man eine mögliche Ausführungsvariante einer EHLA-Vorrichtung mit einem Werkstückträger 1 für das herzustellende oder zu bearbeitende Produkt und einem zentralen Aufnahmebereich 28 zur Bearbeitung oder Herstellung des Produktes über das Laserauftragschweißverfahren. Die Aufhängung des Werkstückträgers 1 erfolgt über Zug-Druck-Streben 15 an sechs unterschiedlichen Punkten. Jede Zug-Druck-Strebe 15 ist mit einem unteren, mit dem Werkstückträger 1 verbundenen Drehgelenk 3 und einem an einen Schlitten 6 gekoppelten oberen Drehgelenk 4 verbunden. Der Werkstückträger 1 ist zwischen drei Antriebssäulen (2.1, 2.2, 2.3) zentral angeordnet und über die Schlitten 6 entlang einer oder mehreren der Raumrichtungen x, y und/oder z bewegbar. Ein Schlitten 6 wird entlang von inneren zum Werkstückträger 1 ausgerichteten Führungsschienen 5 vertikal bewegt, um so den Werkstückträger 1 (oder in einer anderen Variante die Trägerplatte 20) in eine Bahnbewegung zu versetzen.

Der Schlitten 6 ist mit einer Antriebsriemenklemmung 7 verbunden, welche wiederum die Zug-Druck-Streben 15 über die Drehgelenke 4 koppelt. Die Vertikalbewegung des inneren Schlittens 6 erfolgt über einen Antriebsriemen 12, vorzugsweise einen Zahnriemen. An der Rückseite jeder Antriebssäule 2 (also gegenüberliegend der inneren Führungsschiene 5) befindet sich eine äußere Führungsschiene 8, in der ein äußerer Schlitten 11 geführt wird. Zusätzlich ist ein Ausgleichsgewicht 9 für den Masseausgleich vorgesehen. Auch der rückseitige Schlitten 11 umfasst eine Antriebsriemenklemmung 10. Zur Führung des Antriebsriemens 12 sind an der Kopfseite und an der Fußseite jeder Antriebssäule 2 Umlenkungen 13, 14 vorgesehen. Die Zug-Druck-Streben 15 halten den Werkstückträger 1 von oben.

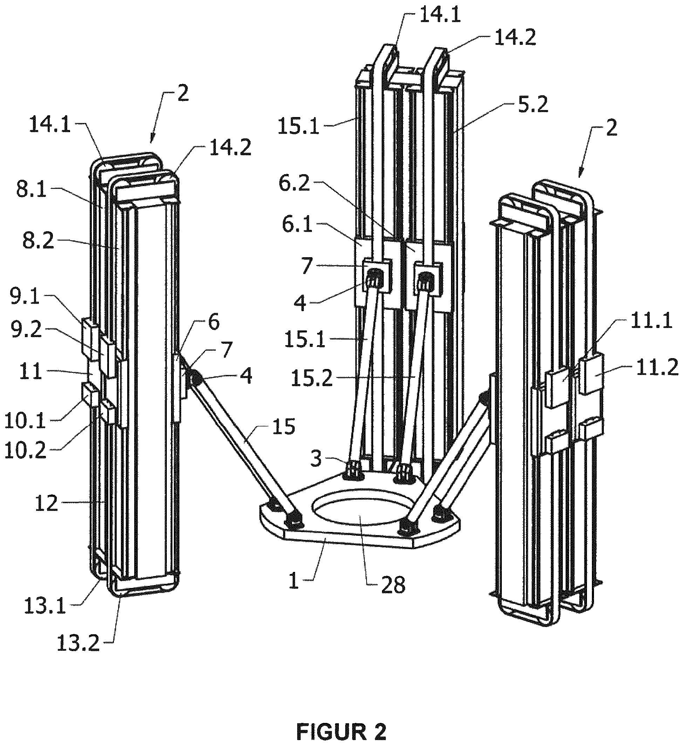

In Fig. 2 ist eine weiter entwickelte Ausführungsvariante vorgesehen, bei der jede einzelne Zug-Druck-Strebe 15.1, 15.2 etc. einer Antriebssäule 2.1, 2.2 etc. in einer eigenen Führungsschiene 5.1, 5.2 etc. über einen Schlitten 6.1, 6.2 etc. verläuft. Hier jedoch ist jede einzelne Zug-Druck-Strebe 15.1, 15.2 etc. individuell bewegbar. Jede Achse umfasst eigene Ausgleichsgewichte 9.1, 9.2 etc., die über eigene Schlitten 11.1, 11.2 etc. vertikal entgegengesetzt der Führung des inneren Schlittens 6 geführt werden. Auch hier erfolgt die Aufhängung des Werkstückträgers 1 über die Zug-Druck-Streben 15 von oben.

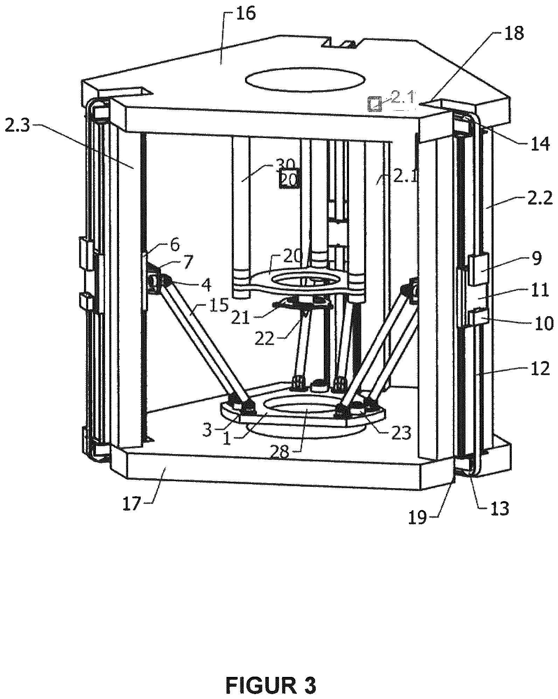

In Fig. 3 werden die drei Antriebssäulen 2.1, 2.2, 2.3 von einer Bodenplatte 17 und einer Deckplatte 16 gehalten. Die Trägerplatte 20 für den Schweißkopf 22 wird von Halterungen 30 gehalten, die mit der Deckplatte 16 verbunden sind. Zusätzlich ist eine Taumelplatte 21 vorgesehen, mit der ein Achsversatz des Schweißkopfes 22 möglich ist.

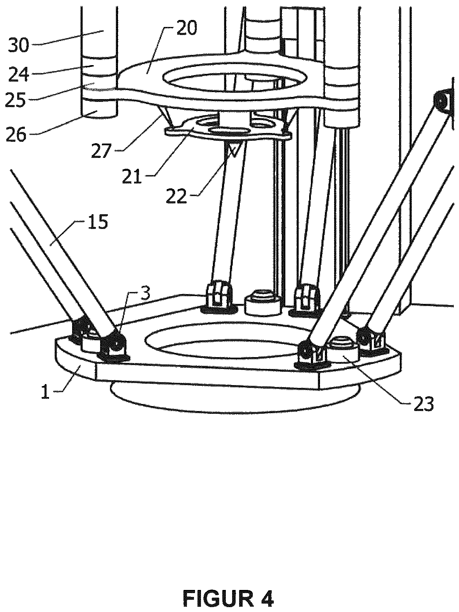

In Fig. 4 ist der Aufbau der Taumelplatten/-konstruktion näher gezeigt. Die Trägerplatte 20 für den Schweißkopf 22 wird an der Halterung 30 über eine obere Kupplungspfanne 24 einen oberen Kupplungsdorn 25 sowie eine untere Kupplungspfanne 26 gehalten. Der Werkstückträger 1 für das herzustellende Produkt umfasst ferner untere Kupplungsdorne 23, die zwischen zwei Zug-Druck-Streben 15 an der Oberfläche des Werkstückträgers 1 angeordnet sind. Die Taumelplatte 21 wird über Aufhängung 27 mit der Trägerplatte 20 verbunden. Dadurch ist ein Achsversatz von 1° - 3° möglich.

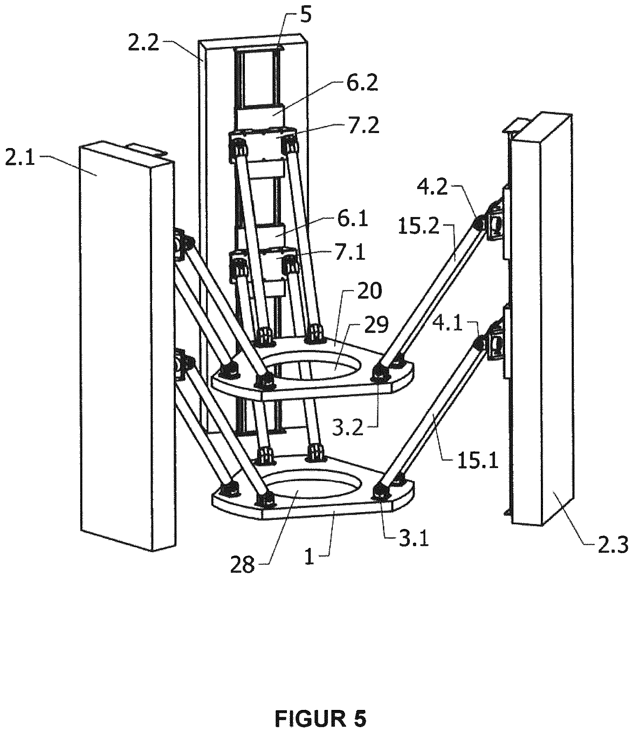

In Fig. 5 ist eine weitere Variante gezeigt, die sowohl eine Trägerplatte 20 mit einem Schweißkopf 22 als auch einen Werkstückträger 1 für ein herzustellendes oder zu bearbeitendes Produkt umfasst. Die Verbindung der Zug-Druck-Streben 15 erfolgt hierbei sowohl an dem Werkstückträger 1 als auch an der Trägerplatte 20 von oben an sechs definierten Aufhängepunkten. Erfindungsgemäß ist nun vorgesehen, dass die obere Trägerplatte 20 über eigene Schlitten 6.2 in drei räumlichen Richtungen bewegbar ist. Dabei verlaufen der Schlitten 6.1, der Werkstückträger 1 und der Schlitten 6.2 der Trägerplatte 20 in derselben Führungsschiene 5 jeweils einer Antriebssäule 2.1, 2.2 und 2.3.

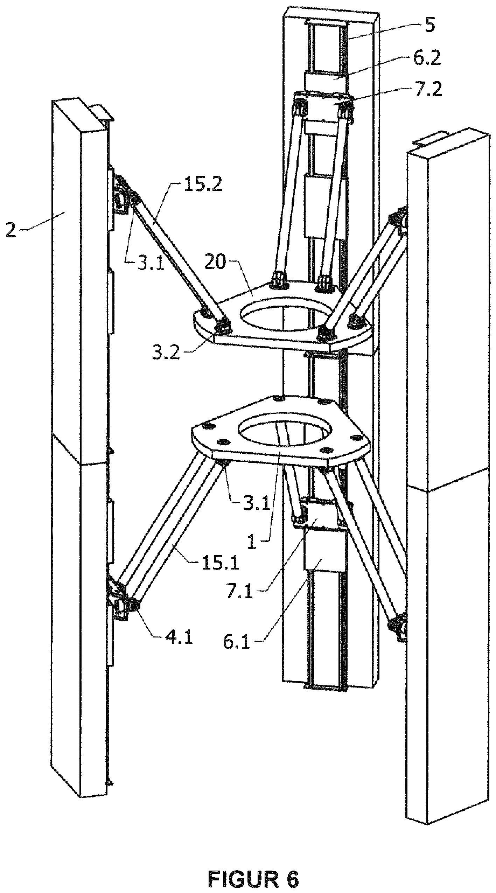

In Fig. 6 ist eine Abwandlung der in Fig. 5 gezeigten Variante dargestellt, indem hier die Kopplung der Zug-Druck-Streben 15 an den Werkstückträger 1 von unten erfolgt. Auch hier sind die einzelnen Zug-Druck-Streben 15.1, 15.2 etc. für den Werkstückträger 1 sowie die Trägerplatte 20 individuell in drei räumlichen Richtungen verfahrbar.

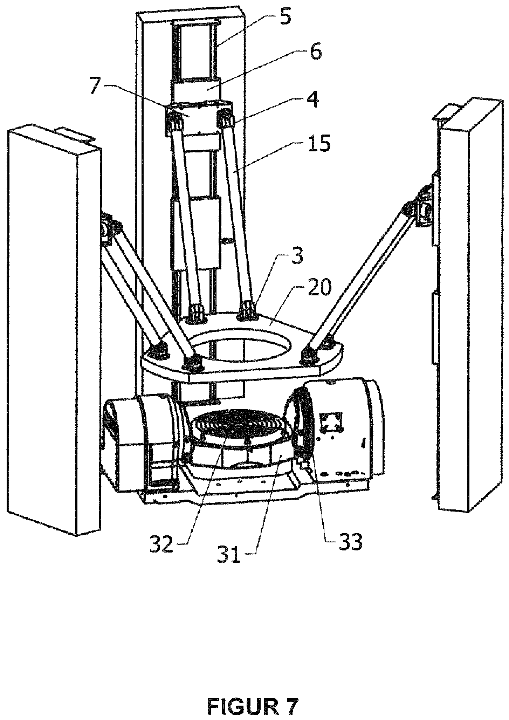

In Fig. 7 ist eine Ausführungsform gezeigt, bei der zusätzlich eine Dreh-SchwenkEinheit vorgesehen ist. Diese umfasst eine Schwenkeinrichtung 31 sowie ein Drehgelenk 33 zur Neigung und Drehung eines Produktaufnahmebereiches 32 für das herzustellende oder zu bearbeitende Produkt.

Mit den erfindungsgemäßen Vorrichtungen und Verfahren lassen sich Geschwindigkeiten von > 200 m/min, aber vorzugsweise bis 1.000 m/min und Beschleunigungen von bis zu 100 m/s² zur Durchführung eines EHLA-Auftragsverfahrens erreichen. Dabei werden hohe Genauigkeiten bei geringen Schichtdicken erreicht.

### Bezugszeichenliste:

1 = Werkstückträger
2 = Antriebsäule
3 = Drehgelenk unten (Produktträgerplatte)
4 = Drehgelenk oben (Antriebssäule)
5 = Führungsschiene innen
6 = Schlitten innen
7 = Antriebsriemenklemmung
8 = Führungsschiene außen
9 = Ausgleichsgewicht
10 = Antriebsriemenklemmung
11 = Schlitten außen
12 = Antriebsriemen
13 = Umlenkung für Antriebsriemen unten
14 = Umlenkung für Antriebsriemen oben
15 = Zug-Druck-Streben
16 = Deckplatte
17 = Basisplatte
18 = Aufnahme für Antriebssäule oben
19 = Aufnahme für Antriebssäule unten
20 = Trägerplatte
21 = Taumelplatte
22 = Schweißkopf
23 = Kupplungsdorn unten
24 = Kupplungspfanne oben
25 = Kupplungsdorn oben
26 = Kupplungspfanne unten
27 = Aufhängung
28 = Produktaufnahme
29 = Aufnahme für Schweißkopf
30 = Halterung
31 = Schwenkeinrichtung
32 = Produktaufnahmebereich
33 = Drehgelenk

## Patentansprüche

1. Vorrichtung zum Extrem-Hochgeschwindigkeitsauftragschweißen, umfassend:
- wenigstens drei Antriebssäulen (2),
- einen zentral zwischen den Antriebssäulen (2.1, 2.2, 2.3) angeordneten Werkstückträger (1) für ein herzustellendes Produkt, welcher
- über mehrere Zug-Druck-Streben (15) und an deren Enden angebrachten Drehgelenken (3, 4) mit den Antriebssäulen (2.1, 2.2, 2.3) in drei Raumrichtungen (x, y, z) bewegbar verbundenen ist, **wobei**
- jede Antriebssäule (2.1, 2.2, 2.3) wenigstens eine dem Werkstückträger (1) zugewandte innere Führungsschiene (5) mit einem darin geführten inneren Schlitten (6) zur Durchführung einer Bewegung des Werkstückträgers (1) in die drei Raumrichtungen (x, y, z) aufweist,
- wobei die Vorrichtung einen Schweißkopf (22) mit einer Düse in Form einer Pulverzufuhrdüse oder Drahtzufuhrdüse umfasst, wobei der Schweißkopf (22) mit der Düse von einer Trägerplatte (20) zwischen den Antriebssäulen (2) gehalten wird,
**dadurch gekennzeichnet, dass** die Vorrichtung eine äußere Führungsschiene (8) mit einem darin geführten äußeren Schlitten (11) zur gegenüber dem inneren Schlitten (6) vertikal entgegengesetzten Führung eines Ausgleichsgewichts (9) aufweist,
wobei die Ausgleichsgewichte (9) für einen Massenausgleich bei Geschwindigkeiten von > 200 m/min und Beschleunigungen von 50 m/s² oder mehr sorgen.

2. Vorrichtung nach Anspruch 1, **dadurch gekennzeichnet, dass** der Werkstückträger (1) an sechs Punkten über jeweils zwei gleich lange parallele Zug-Druck-Streben (15) aufgehängt ist, wobei jeweils zwei Zug-Druck-Streben (15) mit jeweils einem inneren Schlitten (6) einer Antriebssäule (2) verbunden sind.

3. Vorrichtung nach Anspruch 1 oder 2, **dadurch gekennzeichnet, dass** die Führung der Schlitten (6, 11) über an den Antriebssäulen (2) vorgesehene Umlenkungen (13, 14) für Antriebsriemen (12) erfolgt.

4. Vorrichtung nach einem der vorhergehenden Ansprüche, **dadurch gekennzeichnet, dass** die Schlitten (6, 11) der Antriebssäulen (2) eine Antriebsriemenklemmung (7, 10) für einen Antriebsriemen (12) umfassen.

5. Vorrichtung nach einem der vorhergehenden Ansprüche, **dadurch gekennzeichnet, dass** jede einzelne Zug-Druck-Strebe (15.1, 15.2) einer Antriebssäule (2.1, 2.2, 2.3) mit einem eigenen, unabhängig vertikal bewegbaren Schlitten (6.1, 6.2) innerhalb einer eigenen Führungsschiene (5.1, 5.2) in Vertikalrichtung individuell bewegbar ist.

6. Vorrichtung nach einem der vorhergehenden Ansprüche, **dadurch gekennzeichnet, dass** der Schweißkopf (22) von einer Trägerplatte (20) gehalten wird, welche parallel zum Werkstückträger (1) für das herzustellende Produkt angeordnet ist, wobei zwischen der Trägerplatte (20) und dem Werkstückträger (1) zusätzlich eine Taumelplatte (21) aufgehängt ist, welche einen Achsenversatz des Schweißkopfes (22) ermöglicht.

7. Vorrichtung nach Anspruch 6, **dadurch gekennzeichnet, dass** die Aufhängung der Trägerplatte (20) für den Schweißkopf (22) an eine Deckplatte (16) über eine von oben fassende obere Kupplungspfanne (24) und einen von unten fassende untere Kupplungsdorn (25) an die Halterungen (30) erfolgt.

8. Vorrichtung nach Anspruch 6 oder 7, **dadurch gekennzeichnet, dass** die Taumelplatte (21) mit der Trägerplatte (20) über Aufhängungen (27) verbunden ist.

9. Vorrichtung nach einem der vorhergehenden Ansprüche, **dadurch gekennzeichnet, dass** die Kopplung der in Vertikalrichtung in den Antriebssäulen (2) bewegbaren Zug-Druck-Streben (15) an den Werkstückträger (1) entweder von der Seite oder an deren Oberseite oder an deren Unterseite erfolgt.

10. Vorrichtung nach Anspruch 1, **dadurch gekennzeichnet, dass** eine Dreh-Schwenkeinrichtung (31, 33) zur Aufnahme des herzustellenden Produkts in den Produktaufnahmebereich (32) vorgesehen ist, welche unterhalb der Trägerplatte (20) für den Schweißkopf (22) angeordnet ist.

11. Vorrichtung nach einem der vorhergehenden Ansprüche, **dadurch gekennzeichnet, dass** es sich bei dem Schweißkopf um einen Laserschweißkopf oder einen Lötkopf handelt.

12. Vorrichtung nach einem der vorhergehenden Ansprüche, **dadurch gekennzeichnet, dass** zusätzlich ein achsenbeweglicher Fräskopf zur nachträglichen Bearbeitung des Werkstückes vorgesehen ist.

13. Vorrichtung nach einem der vorhergehenden Ansprüche, **dadurch gekennzeichnet, dass** die Trägerplatte (20) unbeweglich ausgestaltet und der Werkstückträger (1) achsenbeweglich in die drei x-, y, z-Raumrichtungen verfahrbar ist.

14. Verfahren zur Herstellung eines Produktes durch Extrem-Hochgeschwindigkeitsauftragschweißen (EHLA), **wobei** ein Werkstückträger für das zu fertigende Produkt über wenigstens drei Antriebssäulen in drei Raumrichtungen (x, y, z) entlang eines parallel zu dem Werkstückträger für ein herzustellendes Produkt angeordneten Schweißkopfs mit einer Düse in Form einer Pulverzufuhrdüse oder Drahtzufuhrdüse bewegt wird, wobei jede Antriebssäule eine Bahnbewegung des Werkstückträgers über damit verbundene Zug-Druck-Streben und ein Masseausgleich durch entsprechende Ausgleichgewichte zulässt, wobei die Ausgleichsgewichte (9) im Betrieb für einen Massenausgleich bei Geschwindigkeiten von > 200 m/min und Beschleunigungen von 50 m/s oder mehr sorgen.

15. Verfahren nach Anspruch 14, **dadurch gekennzeichnet, dass** zur Ausgestaltung von Kurven, Bahnen und/oder Hohlräumen ein oszillierender Betrieb erfolgt.

16. Verfahren nach Anspruch 14 oder 15, **dadurch gekennzeichnet, dass** oberhalb des Werkstückträgers eine Trägerplatte für einen Schweißkopf angeordnet wird.

17. Verfahren nach Anspruch 16, **dadurch gekennzeichnet, dass** die Trägerplatte unbeweglich gehalten und der Werkstückträger in die drei x-, y-, z-Raumrichtungen individuell verfahren wird.

18. Verfahren nach einem der Ansprüche 14 bis 17, **dadurch gekennzeichnet, dass** zur Herstellung des Produkts amorphe und/oder kristalline Materialzusammensetzungen eingesetzt werden.

## Claims

1. A device for extreme high-speed weld cladding, comprising:
- at least three drive columns (2),
- a workpiece support (1) for a product to be manufactured, which is arranged centrally between the drive columns (2.1, 2.2, 2.3), which
- is movably connected to the drive columns (2.1, 2.2, 2.3) in three spatial directions (x, y, z) via multiple tension-compression struts (15) and rotary joints (3, 4) attached to the ends thereof, wherein
- each drive column (2.1, 2.2, 2.3) has at least one inner guide rail (5) facing the workpiece support (1) with an inner carriage (6) guided therein for moving the workpiece support (1) in the three spatial directions (x, y, z),
- wherein the device comprises a welding head (22) with a nozzle in the form of a powder nozzle or a wire nozzle, wherein the welding head (22) with the nozzle is held by a support plate (20) between the drive columns (2),
**characterized in that** the device has an outer guide rail (8) with an outer carriage (11) guided therein for guiding a counterweight (9) in a vertically opposite direction to the inner carriage (6),
wherein the counterweights (9) ensure mass balancing at speeds of > 200 m/min and accelerations of 50 m/s² or more.

2. The device according to claim 1, **characterized in that** the workpiece support (1) is suspended at six points via two equally long parallel tension-compression-struts (15) each, wherein two tension-compression-struts (15) each are connected to an inner carriage (6) of a drive column (2).

3. The device according to claim 1 or 2, **characterized in that** the carriages (6, 11) are guided via idlers (13, 14) for drive belts (12) provided on the drive columns (2).

4. The device according to one of the preceding claims, **characterized in that** the carriages (6, 11) of the drive columns (2) comprise a drive belt clamping (7, 10) for a drive belt (12).

5. The device according to one of the preceding claims, **characterized in that** each individual tension-compression-strut (15.1, 15.2) of a drive column (2.1, 2.2, 2.3) can be individually moved in the vertical direction within its own guide rail (5.1, 5.2) with its own, independently vertically movable carriage (6.1, 6.2)

6. The device according to one of the preceding claims, **characterized in that** the welding head (22) is held by a support plate (20), which is arranged parallel to the workpiece support (1) for the product to be manufactured, wherein a wobble plate (21) is additionally suspended between the support plate (20) and the workpiece support (1) enabling an axial displacement of the welding head (22).

7. The device according to claim 6, **characterized in that** the support plate (20) for the welding head (22) is suspended to a cover plate (16) via an upper coupling socket (24) engaging from above and to the holder (30) via a lower coupling mandrel (25) engaging from below.

8. The device according to claim 6 or 7, **characterized in that** the wobble plate (21) is connected to the support plate (20) via suspensions (27).

9. The device according to one of the preceding claims, **characterized in that** the tension-compression-struts (15), which can be vertically moved in the drive columns (2), are coupled to the workpiece support (1) either from the side or on its upper side or its lower side.

10. The device according to claim 1, **characterized in that** a rotary pivot device (31, 33) is provided for receiving the product to be manufactured in the product receiving area (32), which is arranged below the support plate (20) for the welding head (22).

11. The device according to one of the preceding claims, **characterized in that** the welding head is a laser welding head or a soldering head.

12. The device according to one of the preceding claims, **characterized in that** an axially movable milling head is additionally provided for subsequent processing of the workpiece.

13. The device according to one of the preceding claims, **characterized in that** the support plate (20) is designed to be immovable and the workpiece support (1) can be axially moved in the three spatial directions x, y, z.

14. A method for manufacturing a product by extreme high-speed weld cladding (EHLA), wherein a workpiece support for the product to be manufactured is moved via at least three drive columns in three spatial directions (x, y, z) along a welding head, which is arranged parallel to the workpiece support for a product to be manufactured, with a nozzle in the form of a powder nozzle or a wire nozzle, wherein each drive column allows a path movement of the workpiece support via tension-compression-struts connected thereto and a mass balancing by means of corresponding counterweights, wherein the counterweights (9) ensure mass balancing at speeds of > 200 m/min and accelerations of 50 m/s or more during operation.

15. The method according to claim 14, **characterized in that** an oscillating operation is used to form curves, paths and/or cavities.

16. The method according to claim 14 or 15, **characterized in that** a support plate for a welding head is arranged above the workpiece support.

17. The method according to claim 16, **characterized in that** the support plate is held immovably and the workpiece support is moved individually in the three spatial directions x, y, z.

18. The method according to one of the claims 14 to 17, **characterized in that** amorphous and/or crystalline material compositions are used for manufacturing the product.

## Revendications

1. Dispositif de soudage de rechargement à très grande vitesse, comprenant :
- au moins trois colonnes d'entraînement (2),
- un porte-pièce (1) agencé de manière centrale entre les colonnes d'entraînement (2.1, 2.2, 2.3) et destiné à un produit à fabriquer, qui
- est relié de manière mobile aux colonnes d'entraînement (2.1, 2.2, 2.3) dans trois directions spatiales (x, y, z) par l'intermédiaire de plusieurs barres de traction-compression (15) et d'articulations rotatives (3, 4) fixées aux extrémités des dites barres,
- chaque colonne d'entraînement (2.1, 2.2, 2.3) présente au moins un rail de guidage intérieur (5) tourné vers le porte-pièce (1) et muni d'un coulisseau intérieur (6) qui est guidé dans ledit rail et permet de mettre en œuvre un déplacement du porte-pièce (1) dans les trois directions spatiales (x, y, z),
- le dispositif comprenant une tête de soudage (22) avec une buse se présentant sous la forme d'une buse d'alimentation de poudre ou d'une buse d'alimentation de fil, la tête de soudage (22) munie de la buse étant retenue entre les colonnes d'entraînement (2) par une plaque de support (20),
**caractérisé en ce que** le dispositif présente un rail de guidage extérieur (8) avec un coulisseau extérieur (11) qui est guidé dans ledit rail, afin de guider un poids d'équilibrage (9) de manière verticalement opposée par rapport au coulisseau intérieur (6),
les poids d'équilibrage (9) assurant un équilibrage de masse à des vitesses > 200 m/min et à des accélérations supérieures ou égales à 50 m/s².

2. Dispositif selon la revendication 1, **caractérisé en ce que** le porte-pièce (1) est suspendu en six points par l'intermédiaire de respectivement deux barres de traction-compression (15) de même longueur, respectivement deux barres de traction-compression (15) étant reliées à respectivement un coulisseau intérieur (6) d'une colonne d'entraînement (2).

3. Dispositif selon la revendication 1 ou 2, **caractérisé en ce que** le guidage des coulisseaux (6, 11) intervient par l'intermédiaire de renvois (13, 14) prévus au niveau des colonnes d'entraînement (2) et destinés à des courroies d'entraînement (12).

4. Dispositif selon l'une quelconque des revendications précédentes, **caractérisé en ce que** les coulisseaux (6, 11) des colonnes d'entraînement (2) comprennent une attache de courroie d'entraînement (7, 10) destinée à une courroie d'entraînement (12).

5. Dispositif selon l'une quelconque des revendications précédentes, **caractérisé en ce que** chaque barre individuelle de traction-compression (15.1, 15.2) d'une colonne d'entraînement (2.1, 2.2, 2.3) peut être déplacée individuellement dans la direction verticale à l'intérieur d'un rail de guidage (5.1, 5.2) séparé avec son propre coulisseau (6.1, 6.2) mobile verticalement de manière indépendante.

6. Dispositif selon l'une quelconque des revendications précédentes, **caractérisé en ce que** la tête de soudage (22) est retenue par une plaque de support (20) qui est agencée parallèlement au porte-pièce (1) destiné au produit à fabriquer, une plaque oscillante (21) étant en outre suspendue entre la plaque de support (20) et le porte-pièce (1), ce qui permet un décalage axial de la tête de soudage (22).

7. Dispositif selon la revendication 6, **caractérisé en ce que** la suspension de la plaque de support (20) destinée à la tête de soudage (22) sur une plaque de recouvrement (16) intervient au niveau des supports (30) par l'intermédiaire d'une douille d'accouplement supérieure (24) venant en prise par le haut et d'un mandrin d'accouplement inférieur (25) venant en prise par le bas.

8. Dispositif selon la revendication 6 ou 7, **caractérisé en ce que** la plaque oscillante (21) est reliée à la plaque de support (20) par l'intermédiaire de suspensions (27).

9. Dispositif selon l'une quelconque des revendications précédentes, **caractérisé en ce que** le couplage des barres de traction-compression (15) mobiles dans les colonnes d'entraînement (2) dans le sens vertical intervient au niveau du porte-pièce (1) soit sur le côté, soit sur sa face supérieure, soit sur sa face inférieure.

10. Dispositif selon la revendication 1, **caractérisé en ce qu'**un dispositif de pivotement-rotation (31, 33) est fourni afin d'accueillir le produit à fabriquer dans la zone de réception de produit (32), ledit dispositif étant agencé en dessous de la plaque de support (20) destinée à la tête de soudage (22).

11. Dispositif selon l'une quelconque des revendications précédentes, **caractérisé en ce que** la tête de soudage est une tête de soudage au laser ou une tête de brasage.

12. Dispositif selon l'une quelconque des revendications précédentes, **caractérisé en ce qu'**une tête de fraisage à mobilité axiale destinée à l'usinage ultérieur de la pièce est en outre fournie.

13. Dispositif selon l'une quelconque des revendications précédentes, **caractérisé en ce que** la plaque de support (20) est conçue de manière immobile et le porte-pièce (1) peut être déplacé de manière axialement mobile dans les trois directions spatiales x, y, z.

14. Procédé de fabrication d'un produit par soudage de rechargement à très grande vitesse (EHLA), un porte-pièce destiné au produit à fabriquer étant déplacé par l'intermédiaire d'au moins trois colonnes d'entraînement dans trois directions spatiales (x, y, z) le long d'une tête de soudage munie d'une buse qui se présente sous la forme d'une buse d'alimentation de poudre ou d'une buse d'alimentation de fil et qui est agencée parallèlement au porte-pièce destiné au produit à fabriquer, chaque colonne d'entraînement permettant un déplacement en couloir du porte-pièce par l'intermédiaire de barres de traction-compression associées et un équilibrage de masse grâce à des poids d'équilibrage correspondants, les poids d'équilibrage (9) assurant en cours de fonctionnement un équilibrage de masse à des vitesses > 200 m/min et à des accélérations supérieures ou égales à 50 m/s.

15. Procédé selon la revendication 14, **caractérisé en ce qu'**un fonctionnement oscillant est mis en œuvre afin de créer des courbes, des bandes et/ou des cavités.

16. Procédé selon la revendication 14 ou 15, **caractérisé en ce qu'**une plaque de support destinée à une tête de soudage est agencée au-dessus du porte-pièce.

17. Procédé selon la revendication 16, **caractérisé en ce que** la plaque de support est retenue immobile et le porte-pièce est déplacé individuellement dans les trois directions spatiales x, y, z.

18. Procédé selon l'une quelconque des revendications 14 à 17, **caractérisé en ce que** des compositions de matériaux amorphes et/ou cristallins sont utilisées pour la fabrication du produit.
